(19) Europäisches Patentamt
European Patent Office
Office européen des brevets

(11) EP 1 863 893 B1

(12) EUROPÄISCHE PATENTSCHRIFT

(45) Veröffentlichungstag und Bekanntmachung des Hinweises auf die Patenterteilung:
**23.09.2009 Patentblatt 2009/39**

(21) Anmeldenummer: **06725206.4**

(22) Anmeldetag: **21.03.2006**

(51) Int Cl.:
*C11D 3/00* (2006.01) *C11D 3/37* (2006.01)
*C08G 71/02* (2006.01) *C08G 69/02* (2006.01)

(86) Internationale Anmeldenummer:
**PCT/EP2006/060920**

(87) Internationale Veröffentlichungsnummer:
**WO 2006/100246 (28.09.2006 Gazette 2006/39)**

# (54) VERWENDUNG VON KATIONISCHEN PRODUKTEN ALS FARBFIXIERENDER UND/ODER FARBÜBERTRAGUNGSINHIBIERENDER ZUSATZ ZU WASCHMITTELN UND WÄSCHENACHBEHANDLUNGSMITTELN

USE OF CATIONIC PRODUCTS AS ADDITIVES FOR FIXING COLOURS AND/OR INHIBITING THE RUNNING OF COLOURS, FOR WASHING PRODUCTS AND WASHING AFTERTREATMENT PRODUCTS

UTILISATION DE PRODUITS CATIONIQUES SERVANT D'ADDITIFS DE FIXATION DES COULEURS OU D'INHIBITION DU TRANSFERT DES COULEURS DANS DES LESSIVES ET AGENTS DE TRAITEMENT DU LINGE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.03.2005 DE 102005013780**

(43) Veröffentlichungstag der Anmeldung:
**12.12.2007 Patentblatt 2007/50**

(73) Patentinhaber: **BASF SE**
**67056 Ludwigshafen (DE)**

(72) Erfinder:
- **DETERING, Jürgen**
  **67117 Limburgerhof (DE)**
- **HERRERA TABOADA, Lidcay**
  **67063 Ludwigshafen (DE)**
- **WEIDL, Christian Hubert**
  **68167 Mannheim (DE)**

(74) Vertreter: **Reitstötter - Kinzebach**
**Patentanwälte**
**Ludwigsplatz 4**
**67059 Ludwigshafen (DE)**

(56) Entgegenhaltungen:
**EP-A- 0 665 255**
**EP-A- 0 824 156**
**EP-A- 1 236 793**
**WO-A-98/17762**
**DE-A1- 2 309 099**
**US-A- 4 157 388**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft die Verwendung von kationischen Produkten, die durch Umsetzung von

(A1) nichtcyclischen Aminen, hergestellt durch Umsetzung von

(A1a) Mono(N,N-dialkylaminoalkyl)aminen mit
(A1b) bifunktionellen Verbindungen, ausgewählt aus der Gruppe Harnstoff, Thioharnstoff, Dialkylcarbonate, aliphatische und aromatische Dicarbonsäuren und aliphatische und aromatische Diisocyanate, im Molverhältnis 1,2 : 1 bis 2,1 : 1,
oder

(A2) Mischungen von nichtcyclischen Aminen (A1) und cyclischen Aminen (A3) im Molverhältnis 10 : 1 bis 1 : 10 mit

(B) bifunktionellen Verbindungen, ausgewählt aus der Gruppe der Alkylendihalogenide, Dihalogenalkylether, Halomethyloxirane und Bisepoxide,
in einem Molverhältnis (B) zu (A1) oder (B) zu (A2) von 0,6 : 1 bis 1,3 : 1 erhältlich sind,
als farbfixierender und/oder farbübertragungsinhibierender Zusatz zu Waschmitteln und Wäschenachbehandlungsmitteln.

Außerdem betrifft die Erfindung Waschmittel und Wäschenachbehandlungsmittel, die diese kationischen Produkte enthalten.

Weiterhin betrifft die Erfindung neue kationische Produkte, die erhältlich sind durch Umsetzung von

(A1) nichtcyclischen Aminen, hergestellt durch Umsetzung von

(A1a) Mono(N,N-dialkylaminoalkyl)aminen mit
(A1b) bifunktionellen Verbindungen, ausgewählt aus der Gruppe Harnstoff, Thioharnstoff, Dialkylcarbonate, aliphatische und aromatische Dicarbonsäuren und aliphatische und aromatische Diisocyanate, im Molverhältnis 1,2 : 1 bis 2,1 : 1,
mit

(B) bifunktionellen Verbindungen, ausgewählt aus der Gruppe der Halomethyloxirane und Bisepoxide,
im Molverhältnis (B) zu (A1) von 0,6 : 1 bis 1,3 : 1,
sowie neue kationische Produkte, die erhältlich sind durch Umsetzung von

(A1) nichtcyclischen Aminen, hergestellt durch Umsetzung von

(A1a) Mono(N,N-dialkylaminoalkyl)aminen mit
(A1b) bifunktionellen Verbindungen, ausgewählt aus der Gruppe der aliphatischen und aromatischen Dicarbonsäuren und der aliphatischen und aromatischen Diisocyanate, im Molverhältnis 1,2 : 1 bis 2,1 : 1,
mit

(B) bifunktionellen Verbindungen, ausgewählt aus der Gruppe der Alkylendihalogenide, Dihalogenalkylether, Halomethyloxirane und Bisepoxide,
im Molverhältnis (B) zu (A1) von 0,6 : 1 bis 1,3 : 1.

Schließlich betrifft die Erfindung neue kationische Produkte, die erhältlich sind durch Umsetzung von

(A2) Mischungen von

(A1) nichtcyclischen Aminen, hergestellt durch Umsetzung von

(A1a) Mono(N,N-dialkylaminoalkyl)aminen mit
(A1b) bifunktionellen Verbindungen, ausgewählt aus der Gruppe Harnstoff, Thioharnstoff, Dialkylcarbonate, aliphatische und aromatische Dicarbonsäuren und aliphatische und aromatische Diisocyanate,
im Molverhältnis 1,2 : 1 bis 2,1 : 1,

und

(A3) cyclischen Aminen
im Molverhältnis 10 : 1 bis 1 : 10
mit

(B) bifunktionellen Verbindungen, ausgewählt aus der Gruppe der Alkylendihalogenide, Dihalogenalkylether, Halomethyloxirane und Bisepoxide,
im Molverhältnis (B) zu (A2) von 0,6 : 1 bis 1,3 : 1.

Das mehrfache Waschen farbiger Textilien führt häufig zu einem Verblassen der Farbe, wodurch diese Textilien unansehnlich werden. Dieser Effekt ist vornehmlich auf die mangelnde Waschechtheit der farbigen Textilien zurückzuführen. Die Farbstoffe sind nur unzureichend im Gewebe verankert und können daher leicht ausgewaschen werden. Zusätzlich können die beim Waschen von den gefärbten Textilien abgelösten Farbstoffe auf andere Gewebe übertragen werden, wodurch diese Gewebe vergrauen. Um dieser Farbvergrauung vorzubeugen, wurden sogenannte Color-Waschmittel entwickelt, die polymere Farbübertragungsinhibitoren enthalten.

Als farbübertragungsinhibierender und farbfixierender Zusatz für Waschmittel und Wäschenachbehandlungsmittel sind aus der WO-A-98/17762 kationische Polykondensationsprodukte, die durch Kondensation von Piperazinen und/oder Imidazolen mit Alkylendihalogeniden, Halomethyloxiranen oder Bisepoxiden erhalten werden und quaterniert sein können, bekannt.

In der WO-A-98/21301 werden für diesen Zweck Copolymere von Vinylimidazol und Vinylpyrrolidon, deren Vinylimidazoleinheiten quaterniert sind, beschrieben.

In der WO-A-04/56888 werden Copolymere auf Basis kationischer Monomerer vom Diallyldialkylammoniumtyp und hydrophober nichtionischer Monomerer wie Methylmethacrylat und ethoxyliertem Nonylphenolacrylat als entsprechende Zusätze für Reinigungsprodukte beschrieben.
Aus der WO-A-98/29529 sind Textilwaschmittel bekannt, die als kationische Farbfixiermittel polymere quartäre Ammoniumverbindungen enthalten, die mit anionischen Tensiden keine Ausfällungen ergeben.

In der WO-A-01/74982 werden Textilpflegemittel beschrieben, die mindestens eine Cellulase und mindestens ein Imidazolidineinheiten enthaltendes farbfixierendes Polymer enthalten.

Kationische Polymere, die durch Kondensation der Umsetzungsprodukte von Dialkylaminoalkylaminen und Harnstoff mit Alkylendihalogeniden erhalten werden, sind aus der US-A-4 157 388 als Feuchtigkeits- bzw. Feuchthaltemittel in Haar- und Gewebekonditionierern bekannt. In der DE-A-198 40 019 wird die Anwendung derartiger Polymere als Hilfsmittel in der Galvanotechnik beschrieben.

Die bislang als Farbübertragungsinhibitor und Farbfixierer eingesetzten Polymere zeigen bei vielen Farbgeweben keine ausreichende Wirkung.

Der Erfindung lag daher die Aufgabe zugrunde, Polymere bereitzustellen, mit denen Farbstoffablösung und Farbübertragung beim Waschen wirksam unterdrückt werden können.

Demgemäß wurde die Verwendung von kationischen Produkten, die durch Umsetzung von

(A1) nichtcyclischen Aminen, hergestellt durch Umsetzung von

(A1a) Mono(N,N-dialkylaminoalkyl)aminen mit
(A1b) bifunktionellen Verbindungen, ausgewählt aus der Gruppe Harnstoff, Thioharnstoff, Dialkylcarbonate, aliphatische und aromatische Dicarbonsäuren und aliphatische und aromatische Diisocyanate, im Molverhältnis 1,2 : 1 bis 2,1 : 1,
oder

(A2) Mischungen von nichtcyclischen Aminen (A1) und cyclischen Aminen (A3) im Molverhältnis 10 : 1 bis 1 : 10
mit

(B) bifunktionellen Verbindungen, ausgewählt aus der Gruppe der Alkylendihalogenide, Dihalogenalkylether, Halomethyloxirane und Bisepoxide,
in einem Molverhältnis (B) zu (A1) oder (B) zu (A2) von 0,6 : 1 bis 1,3 : 1 erhältlich sind,
als farbfixierender und/oder farbübertragungsinhibierender Zusatz zu Waschmitteln und Wäschenachbehandlungsmitteln gefunden.

Dabei wurden neue kationische Produkte gefunden, die durch Umsetzung der nichtcyclischen Amine (A1) mit Halomethyloxiranen und/oder Bisepoxiden als bifunktionellen Verbindungen (B) im Molverhältnis (B) zu (A1) von 0,6 :

1 bis 1,3 : 1 erhältlich sind.

Weiterhin wurde neue kationische Produkte gefunden, die durch Umsetzung von nichtcyclischen Aminen (A1) auf Basis von Umsetzungsprodukten von Dialkylaminoalkylaminen (A1a) und Dicarbonsäuren und/oder Diisocyanaten als bifunktionellen Verbindungen (A1b) mit den bifunktionellen Verbindungen (B) im Molverhältnis (B) zu (A1) von 0,6 : 1 bis 1,3 : 1 erhältlich sind.

Schließlich wurden kationische Produkte gefunden, die durch Umsetzung von (A2) Mischungen der nichtcyclischen Amine (A1) mit cyclischen Aminen (A3) im Molverhältnis 10 : 1 bis 1 : 10 mit den bifunktionellen Verbindungen (B) im Molverhältnis (B) zu (A2) von 0,6 : 1 bis 1,3 : 1 erhältlich sind.

Sowohl bei den erfindungsgemäßen als auch den erfindungsgemäß zu verwendenden kationischen Produkten werden zur Herstellung des nichtcyclischen Amins (A1) vorzugsweise Mono(N,N-dialkylaminoalkyl)amine (A1a) der allgemeinen Formel I

$$R^1R^2N\text{-}(CH_2)_n\text{-}NH_2 \qquad I$$

eingesetzt, in der die Variablen folgende Bedeutung haben:

$R^1$, $R^2$ unabhängig voneinander $C_1$-$C_6$-Alkyl, bevorzugt $C_1$-$C_4$-Alkyl, das durch Hydroxy substituiert sein kann;
n 2 bis 6.

Besonders bevorzugt sind Dialkylaminoalkylamine 1, die gleiche Alkylreste am Stickstoffatom tragen. Unter diesen sind wiederum die Dimethylaminoalkylamine, vor allem Dimethylaminopropylamin, ganz besonders bevorzugt.

Als bifunktionelle Verbindung (A1b) werden Harnstoff, Thioharnstoff, Dialkylcarbonate, Dicarbonsäuren oder Diisocyanate eingesetzt.

Geeignete Dialkylcarbonate (A1b) weisen insbesondere $C_1$-$C_3$-Alkylreste auf, wobei Dimethylcarbonat und Diethylcarbonat als bevorzugte Beispiele genannt seien.

Die Dicarbonsäuren (A1b) können aliphatische gesättigte oder ungesättigte oder aromatische Dicarbonsäuren sein und weisen insbesondere 2 bis 10 Kohlenstoffatome auf.

Beispiele für geeignete Dicarbonsäuren sind: Oxalsäure, Malonsäure, Bernsteinsäure, Weinsäure, Maleinsäure, Itaconsäure, Glutarsäure, Adipinsäure, Korksäure, Sebacinsäure, Phthalsäure und Terephthalsäure.

Selbstverständlich können auch Mischungen verschiedener Dicarbonsäuren (A1b) eingesetzt werden.

Weiterhin können die Dicarbonsäuren (A1b) in Form der freien Säuren oder als Carbonsäurederivate, wie Anhydride, Ester, insbesondere Di-($C_1$-$C_2$-alkyl)ester, Amide und Säurehalogenide, insbesondere Säurechloride, eingesetzt werden. Als Beispiele für geeignete Säurederivate seien genannt: Maleinsäureanhydrid, Bernsteinsäureanhydrid, Itaconsäureanhydrid und Phthalsäureanhydrid; Adipinsäuredimethylester, Adipinsäurediethylester und Weinsäuredimethylester; Adipinsäurediamid, Adipinsäuremonoamid und Glutarsäurediamid; Adipinsäuredichlorid.

Vorzugsweise werden die freien Säure oder deren Anhydride eingesetzt.

Besonders bevorzugte Dicarbonsäuren (A1b) sind Bernsteinsäure, Glutarsäure, Adipinsäure und Maleinsäure.

Als Diisocyanate (A1b) sind schließlich ebenfalls aliphatische, auch cyclische aliphatische, und aromatische Diisocyanate geeignet. Die Kohlenwasserstoffreste der Diisocyanate (A1b) weisen insbesondere 4 bis 12 Kohlenstoffatome auf.

Beispiele für geeignete Diisocyanate (A1b) sind: Tetramethylendiisocyanat, Hexamethylendiisocyanat (HDI), 2,3,3-Trimethylhexamethylendiisocyanat, Dodecamethylendiisocyanat, 1,4-Cyclohexylendiisocyanat, Dicyclohexylmethandiisocyanat (H12MDI), Isophorondiisocyanat (IPDI), 2,2-Bis(4-isocyanatocyclohexyl)propan, 1,4-Phenylendiisocyanat, 2,4- und 2,6-Toluylendiisocyanat (TDI) und deren Isomerengemische, 2,4'- und 4,4'-Diphenylmethandiisocyanat (MDI), o- und m-Xylylendiioscyanat (XDI), 1,5-Naphthylendiisocyanat, Tetramethylxylylendiisocyanat (TMXDI) und die Isomere (trans/trans, cis/cis, cis/trans) des Bis(4-isocyanatocyclohexyl)methans und deren Gemische.

Selbstverständlich können auch Gemische verschiedener Diisocyanate (A1b) eingesetzt werden.

Bevorzugt sind die aliphatischen und cycloaliphatischen Diisocyanate (A1b), wobei Hexamethylendiisocyanat und Isophorondiisocyanat besonders bevorzugt sind.

Als bifunktionelle Verbindung (A1b) besonders bevorzugt sind Harnstoff, Bernsteinsäure, Adipinsäure, Hexamethylendiisocyanat und Isophorondiisocyanat.

Das Molverhältnis von Dialkylaminoalkylamin (A1a) zu bifunktioneller Verbindung (A1b) beträgt 1,2 : 1 bis 2,1 : 1, vorzugsweise 1,5 : 1 bis 2,1 : 1.

Liegt ein Molverhältnis von (A1a) zu (A1b) von kleiner 2 : 1 vor, so entstehen Umsetzungsprodukte, die bei Verwendung von Harnstoff als Komponenten (A1b) eine freie Harnstoffendgruppe aufweisen und regulierend auf das Molekulargewicht der kationischen Polykondensationsprodukte wirken. Damit kann das Molekulargewicht durch geeignete Wahl dieses Molverhältnisses gezielt gesteuert werden.

Die Herstellung nichtcyclischer Amine (A1), die Harnstoff oder Dicarbonsäuren als bifunktionelle Komponente

(A1b) enthalten, kann beispielsweise durch Umsetzung der Komponenten (A1a) und (A1b) in Masse bei 120 bis 180°C erfolgen, wobei im Fall der Dicarbonsäuren das entstehende Reaktionswasser zu entfernen ist.

Nichtcyclische Amine (A1), die auf Diisocyanaten als Komponente (A1b) basieren, können z.B. so hergestellt werden, daß man die bifunktionelle Komponente (A1b) in einem organischen Lösungsmittel, z.B. einem Carbonsäureester, wie Essigester, bei < 5°C vorlegt und das Amin (A1a) zutropft.

Anstelle der reinen nichtcyclischen Amine (A1) können auch Mischungen (A2) der Amine (A1) mit cyclischen Aminen (A3) zur Herstellung der kationischen Produkte eingesetzt werden.

Als cyclische Amine (A3) eignen sich dabei insbesondere Imidazol und seine Alkylderivate, Piperazin und seine Alkylderivate, Pyrazin und Pyrimidin. Unter den Alkylderivaten sollen dabei auch Derivate verstanden werden, deren Alkylsubstituenten z.B. durch Amino- oder Hydroxygruppen funktionalisiert sind. Als Beispiele für Piperazin- und Imidazolderivate seien im einzelnen genannt: 1-, 2- und 4-($C_1$-$C_{25}$-Alkyl)imidazole, vor allem 1-, 2- und 4-($C_1$-$C_6$-Alkyl)imidazole, wie 1-Methylimidazol, 2-Methylimidazol, 2-Ethylimidazol, 4-Methylimidazol und 1-(3-Aminopropyl)imidazol; 2,4-Di($C_1$-$C_{25}$-alkyl)-imidazole, vor allem 2,4-Di($C_1$-$C_6$-alkyl)imidazole, wie 2-Ethyl-4-methylimidazol; 1-($C_1$-$C_{25}$-Alkyl)piperazine, vor allem 1-($C_1$-$C_6$-Alkyl)piperazine, wie 1-Methylpiperazin; 1,4-Di($C_1$-$C_{25}$-alkyl)piperazine, vor allem 1,4-Di($C_1$-$C_6$-alkyl)piperazine, wie 1,4-Dimethylpiperazin, 1,4-Bis(3-aminopropyl)piperazin, 1-(2-Aminomethyl)piperazin und 1-(2-Hydroxyethyl)piperazin.

Selbstverständlich können auch Mischungen verschiedener cyclischer Amine (A3) eingesetzt werden.

Bevorzugte cyclische Amine (A3) sind die Imidazole, wobei unsubstituiertes Imidazol besonders bevorzugt ist.

Die Mischungen (A2) weisen ein Molverhältnis von nichtcyclischem Amin (A1) zu cyclischem Amin (A3) von 10 : 1 bis 1 : 10, bevorzugt von 7 : 1 bis 1 : 7, besonders bevorzugt von 4 : 1 bis 1 : 4 und ganz besonders bevorzugt von 4 : 1 bis 1 : 2 auf.

Die erfindungsgemäßen oder erfindungsgemäß zu verwendenden kationischen Produkte sind durch Umsetzung des nichtcyclischen Amins (A1) bzw. der Mischungen (A2) von nichtcyclischem Amin (A1) und cyclischem Amin (A3) mit den bifunktionellen Verbindungen (B) erhältlich.

Als bifunktionelle Verbindungen (B) werden dabei Alkylendihalogenide, Dihalogenalkylether, Halomethyloxirane oder Bisepoxide oder Mischungen dieser Verbindungen eingesetzt.

Als Alkylendihalogenide (B) sind vor allem die ω,ω'-Dichloride, -Dibromide und -Diiodide von unverzweigten Alkanen mit 2 bis 8 Kohlenstoffatomen geeignet, wobei die Bromide bevorzugt und die Chloride besonders bevorzugt sind.

Besonders geeignete Alkylendihalogenide (B) sind z.B.: 1,2-Dichlorethan, 1,2-Dibromethan, 1,3-Dichlorpropan, 1,4-Dichlorbutan, 1,5-Dichlorpentan und 1,6-Dichlorhexan,
wobei 1,2-Dichlorethan, 1,4-Dichlorbutan und 1,6-Dichlorhexan bevorzugt sind.

Als Dihalogenalkylether (B) eignen sich vor allem Di(ω,ω'-Halogen-$C_2$-$C_6$-alkyl)ether und (ω-Halogen-$C_2$-$C_6$-alkoxy-$C_2$-$C_6$-alkyl)(ω-halogen-$C_2$-$C_6$-alkyl)ether, wobei Halogen wiederum Chlor, Brom oder Iod bedeuten kann, wobei Brom bevorzugt und Chlor besonders bevorzugt ist. Beispielhaft genannt seien Di(2-chlorethyl)ether und (2-Chlorethoxyethyl)(2-chlorethyl)ether.

Geeignete Halomethyloxirane (B) weisen vorzugsweise 3 bis 7 Kohlenstoffatome auf,
wobei auch hier die Chlorverbindungen bevorzugt sind. Besonders bevorzugtes Halomethyloxiran (B) ist Epichlorhydrin.

Als Bisepoxide (B) eignen sich vor allem Bisepoxialkane mit 4 bis 7 Kohlenstoffatomen und Bisepoxide auf Basis von oligomeren und polymeren Alkylenglykolen, insbesondere $C_2$-$C_3$-Alkylenglykolen, wie Oligo- und Polyethylenglykolbisepoxide, Oligo- und Polypropylenglykolbisepoxide und Bisepoxide von EO/PO-Mischpolymerisaten. Bevorzugte Bisepoxide (B) sind Bisepoxibutan und Oligo- und Polyethylenglykolbisepoxide.

Als bifunktionelle Verbindung (B) besonders bevorzugt sind 1,2-Dichlorethan, 1,4-Dichlorbutan, 1,6-Dichlorhexan, Di(2-chlorethyl)ether und Epichlorhydrin.

Das Molverhältnis von bifunktioneller Verbindung (B) zu Aminkomponente (A1) bzw. (A2) beträgt 0,6 : 1 bis 1,3 : 1, vorzugsweise 0,8 : 1 bis 1,1 : 1.

Die Wahl des Molverhältnisses von (B) zu (A1) bzw. (A2) stellt eine weitere Möglichkeit dar, das Molekulargewicht der kationischen Produkte gezielt zu steuern.

Die Umsetzung kann ebenfalls wie für solche Reaktionen üblich vorgenommen werden. Als besonders vorteilhaft hat sich die Umsetzung von (B) mit (A1) bzw. (A2) in wäßriger Lösung bei 80 bis 120°C erwiesen.

Gewünschtenfalls können die kationischen Produkte, die noch tertiäre Aminogruppen enthalten, zusätzlich mit Alkylierungsmitteln, z.B. Dimethylsulfat, $C_1$-$C_{22}$-Alkylhalogeniden oder Benzylchlorid, umgesetzt werden, wodurch die tertiären Aminogruppen quaterniert werden.

Die Umsetzung mit dem Alkylierungsmittel kann direkt in dem bei der Umsetzung anfallenden Reaktionsgemisch nach allgemein bekannten Methoden durchgeführt werden.

Das mittlere Molekulargewicht $M_w$ der kationischen Produkte kann 500 bis 1 000 000 betragen. Bevorzugt sind mittlere Molekulargewichte $M_w$ von 1 000 bis 100 000 und besonders bevorzugt von 1 500 bis 50 000.

Die kationischen Produkte sind wasserlöslich oder leicht in Wasser dispergierbar und können in festen und flüssigen Waschmitteln und in Wäschenachbehandlungsmitteln eingesetzt werden.

Sie unterdrücken wirksam die Ablösung von Farbstoffen von gefärbten Textilien während des Waschprozesses oder während der Wäschenachbehandlung und verhindern so ein Verblassen der farbigen Textilien. Auch die Farbübertragung auf mitgewaschenes Gewebe und die damit verbundene unerwünschte Verfärbung dieser Gewebe wird wirksam inhibiert. Bereits bei Konzentrationen von 10 bis 150 ppm in der Wasch- bzw. Spülflotte werden gute bis sehr gute farbfixierende und farbübertragungsinhibierende Effekte erzielt.

Die ebenfalls erfindungsgemäßen festen Waschmittelformulierungen enthalten insbesondere folgende Komponenten:

(a) 0,05 bis 20 Gew.-% mindestens eines kationischen Produkts,

(b) 0,5 bis 40 Gew.-% mindestens eines nichtionischen, anionischen und/oder kationischen Tensids,

(c) 0,5 bis 50 Gew.-% eines anorganischen Builders,

(d) 0 bis 10 Gew.-% eines organischen Cobuilders und

(e) 0,1 bis 60 Gew.-% anderer üblicher Inhaltsstoffe, wie Stellmittel, Enzyme, Parfüm, Komplexbildner, Korrosionsinhibitoren, Bleichmittel, Bleichaktivatoren, Bleichkatalysatoren, weitere Farbschutzadditive und Farbübertragungsinhibitoren, Vergrauungsinhibitoren, Soil-Release-Polyester, Faserschutzadditive, Silicone, Farbstoffe, Bakterizide und Konservierungsmittel, Auflösungsverbesserer, Sprengmittel und/oder Wasser,

wobei die Summe der Komponenten (a) bis (e) 100 Gew.-% ergibt.

Die erfindungsgemäßen festen Waschmittelformulierungen können in Pulver-, Granulat-, Extrudat- oder Tablettenform vorliegen.

Die erfindungsgemäßen flüssigen Waschmittelformulierungen haben vorzugsweise folgende Zusammensetzung:

(a) 0,05 bis 20 Gew.-% mindestens eines kationischen Produkts,

(b) 0,5 bis 40 Gew.-% mindestens eines nichtionischen, anionischen und/oder kationischen Tensids,

(c) 0 bis 20 Gew.-% eines anorganischen Builders,

(d) 0 bis 10 Gew.-% eines organischen Cobuilders,

(e) 0,1 bis 60 Gew.-% anderer üblicher Inhaltsstoffe, wie Soda, Enzyme, Parfüm, Komplexbildner, Korrosionsinhibitoren, Bleichmittel, Bleichaktivatoren, Bleichkatalysatoren, weitere Farbschutzadditive und Farbübertragungsinhibitoren, Vergrauungsinhibitoren, Soil-Release-Polyester, Faserschutzadditive, Silicone, Farbstoffe, Bakterizide und Konservierungsmittel, organische Lösemittel, Löslichkeitsvermittler, Hydrotrope, Verdicker und/oder Alkanolamine, und

(f) 0 bis 99,35 Gew.-% Wasser.

Die erfindungsgemäßen Wäschenachbehandlungsmittel, insbesondere Wäschepflegespülmittel, enthalten vorzugsweise

(a) 0,05 bis 20 Gew.-% mindestens eines kationischen Produkts,

(b) 0,1 bis 40 Gew.-% mindestens eines kationischen Tensids,

(c) 0 bis 30 Gew.-% mindestens eines nichtionischen Tensids,

(d) 0,1 bis 30 Gew.-% anderer üblicher Inhaltsstoffe, wie Silicone, andere Gleitmittel, Benetzungsmittel, filmbildende Polymere, Duft- und Farbstoffe, Stabilisatoren, Faserschutzadditive, weitere Farbschutzadditive und Farbübertragungsinhibitoren, Komplexbildner, Viskositätsmodifizierer, Soil-Release-Additive, Löslichkeitsvermittler, Hydrotrope, Korrosionsschutzadditive, Bakterizide und/oder Konservierungsmittel, und

(e) 0 bis 99,75 Gew.-% Wasser.

Als nichtionische Tenside (B) eignen sich dabei vor allem:

- Alkoxylierte $C_8$-$C_{22}$-Alkohole, wie Fettalkoholalkoxylate, Oxoalkoholalkoxylate und Guerbet-Alkoholethoxylate: Die Alkoxylierung kann mit Ethylenoxid, Propylenoxid und/oder Butylenoxid erfolgen. Es können Blockcopolymerisate oder statistische Copolymere vorliegen. Pro mol Alkohol enthalten sie üblicherweise 2 bis 50 mol, vorzugsweise 3 bis 20 mol, mindestens eines Alkylenoxids. Bevorzugtes Alkylenoxid ist Ethylenoxid. Die Alkohole haben vorzugsweise 10 bis 18 Kohlenstoffatome.

- Alkylphenolalkoxylate, insbesondere Alkylphenolethoxylate, die $C_6$-$C_{14}$-Alkylketten und 5 bis 30 mol Alkylenoxid/mol enthalten.

- Alkylpolyglucoside, die $C_8$-$C_{22}$-, vorzugsweise $C_{10}$-$C_{18}$-Alkylketten und in der Regel 1 bis 20, vorzugsweise 1,1 bis 5, Glucosideinheiten enthalten.

- N-Alkylglucamide, Fettsäureamidalkoxylate, Fettsäurealkanolamidalkoxylate sowie Blockcopolymere aus Ethylenoxid, Propylenoxid und/oder Butylenoxid.

Geeignete anionische Tenside sind beispielsweise:

- Sulfate von (Fett)alkoholen mit 8 bis 22, vorzugsweise 10 bis 18, Kohlenstoffatomen, insbesondere $C_9C_{11}$-Alkoholsulfate, $C_{12}C_{14}$-Alkoholsulfate, $C_{12}$-$C_{18}$-Alkoholsulfate, Laurylsulfat, Cetylsulfat, Myristylsulfat, Palmitylsulfat, Stearylsulfat und Talgfettalkoholsulfat.

- Sulfatierte alkoxylierte $C_8$-$C_{22}$-Alkohole (Alkylethersulfate): Verbindungen dieser Art werden beispielsweise dadurch hergestellt, daß man zunächst einen $C_8$-$C_{22}$-, vorzugsweise einen $C_{10}$-$C_{18}$-Alkohol, z.B. einen Fettalkohol, alkoxyliert und das Alk-oxylierungsprodukt anschließend sulfatiert. Für die Alkoxylierung verwendet man vorzugsweise Ethylenoxid.

- Lineare $C_8$-$C_{20}$-Alkylbenzolsulfonate (LAS), vorzugsweise lineare $C_9$-$C_{13}$-Alkylbenzolsulfonate und -Alkyltoluolsulfonate.

- Alkansulfonate, insbesondere $C_8$-$C_{24}$-, vorzugsweise $C_{10}$-$C_{18}$-Alkansulfonate.

- Seifen, wie die Na- und K-Salze von $C_8$-$C_{24}$-Carbonsäuren.

Die anionischen Tenside werden dem Waschmittel vorzugsweise in Form von Salzen zugegeben. Geeignete Salze sind dabei z.B. Alkalimetallsalze, wie Natrium-, Kalium- und Lithiumsalze, und Ammoniumsalze, wie Hydroxyethylammonium-, Di(hydroxyethyl)ammonium- und Tri(hydroxyethyl)ammoniumsalze.

Als besonders geeignete kationische Tenside seien genannt:

- $C_7$-$C_{25}$-Alkylamine;

- N,N-Dimethyl-N-(hydroxy-$C_7$-$C_{25}$-alkyl)ammoniumsalze;

- mit Alkylierungsmitteln quaternisierte Mono- und Di-($C_7$-$C_{25}$-alkyl)dimethylammoniumverbindungen;

- Esterquats, insbesondere quaternäre veresterte Mono-, Di- und Trialkanolamine, die mit $C_8$-$C_{22}$-Carbonsäuren verestert sind;

- Imidazolinquats, insbesondere 1-Alkylimidazoliniumsalze der Formeln II oder III

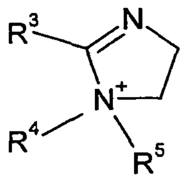

II

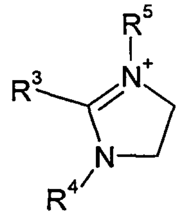

III

in denen die Variablen folgende Bedeutung haben:

$R^3$ $C_1$-$C_{25}$-Alkyl oder $C_2$-$C_{25}$-Alkenyl;
$R^4$ $C_1$-$C_4$-Alkyl oder Hydroxy-$C_1$-$C_4$-alkyl;
$R^5$ $C_1$-$C_4$-Alkyl, Hydroxy-$C_1$-$C_4$-alkyl oder ein Rest $R^1$-(CO)-X-$(CH_2)_m$- (X:-O- oder -NH-; m: 2 oder 3),

wobei mindestens ein Rest $R^3$ $C_7$-$C_{22}$-Alkyl ist.

Geeignete amphotere Tenside sind z.B. Alkylbetaine, Alkylamidbetaine, Aminopropionate, Aminoglycinate und amphotere Imidazoliumverbindungen.

Als anorganische Builder eignen sich insbesondere:

- Kristalline und amorphe Alumosilikate mit ionenaustauschenden Eigenschaften, wie vor allem Zeolithe: Verschiedene Typen von Zeolithen sind geeignet, insbesondere die Zeolithe A, X, B, P, MAP und HS in ihrer Na-Form oder in Formen, in denen Na teilweise gegen andere Kationen wie Li, K, Ca, Mg oder Ammonium ausgetauscht ist.

- Kristalline Silikate, wie insbesondere Disilikate und Schichtsilikate, z.B. δ- und β-$Na_2Si_2O_5$, Die Silikate können in Form ihrer Alkalimetall-, Erdalkalimetall- oder Ammoniumsalze eingesetzt werden, bevorzugt sind die Na-, Li- und Mg-Silikate.

- Amorphe Silikate, wie Natriummetasilikat und amorphes Disilikat.

- Carbonate und Hydrogencarbonate: Diese können in Form ihrer Alkalimetall-, Erdalkalimetall- oder Ammoniumsalze eingesetzt werden. Bevorzugt sind Na-, Li- und Mg-Carbonate und -Hydrogencarbonate, insbesondere Natriumcarbonat und/oder Natriumhydrogencarbonat.

- Polyphosphate, wie Pentanatriumtriphosphat.

Als organische Cobuilder eignen sich vor allem:

- Niedermolekulare Carbonsäuren, wie Citronensäure, hydrophob modifizierte Citronensäure, z. B. Agaricinsäure, Äpfelsäure, Weinsäure, Gluconsäure, Glutarsäure, Bernsteinsäure, Imidodibernsteinsäure, Oxydibernsteinsäure, Propantricarbonsäure, Butantetracarbonsäure, Cyclopentantetracarbonsäure, Alkyl- und Alkenylbernsteinsäuren und Aminopolycarbonsäuren, z.B. Nitrilotriessigsäure, β-Alanindiessigsäure, Ethylendiamintetraessigsäure, Serindiessigsäure, Isoserindiessigsäure, N-(2-Hydroxyethyl)iminoessigsäure, Ethylendiamindibernsteinsäure und Methyl- und Ethylglycindiessigsäure.

- Oligomere und polymere Carbonsäuren, wie Homopolymere von Acrylsäure und Asparaginsäure, Oligomaleinsäuren, Copolymere der Maleinsäure mit Acrylsäure, Methacrylsäure oder $C_2$-$C_{22}$-Olefinen, z.B. Isobuten oder langkettigen α-Olefinen, Vinyl-$C_1$-$C_8$-alkylether, Vinylacetat, Vinylpropionat, (Meth)Acrylsäureester von $C_1$-$C_8$-Alkoholen und Styrol. Bevorzugt sind die Homopolymere der Acrylsäure und Copolymere von Acrylsäure mit Maleinsäure. Die oligomeren und polymeren Carbonsäuren werden in Säureform oder als Natriumsalz eingesetzt.

Geeignete Bleichmittel sind beispielsweise Addukte von Wasserstoffperoxid an anorganische Salze, wie Natriumperborat-Monohydrat, Natriumperborat-Tetrahydrat und Natriumcarbonat-Perhydrat, und Percarbonsäuren, wie Phthalimidopercapronsäure.

Als Bleichaktivatoren eignen sich z.B. N,N,N',N'-Tetraacetylethylendiamin (TAED), Natrium-p-nonanoyloxybenzolsulfonat und N-Methylmorpholiniumacetonitrilmethylsulfat.

Vorzugsweise in Waschmitteln eingesetzte Enzyme sind Proteasen, Lipasen, Amylasen, Cellulasen, Oxidasen und Peroxidasen.

Als weitere Farbübertragungsinhibitoren geeignet sind beispielsweise Homo-, Co- und Pfropfpolymere von 1-Vinylpyrrolidon, 1-Vinylimidazol oder 4-Vinylpyridin-N-oxid. Auch mit Chloressigsäure umgesetzte Homo- und Copolymere des 4-Vinylpyridins eignen sich als Farbübertragungsinhibitoren.

Waschmittelinhaltsstoffe sind im übrigen allgemein bekannt. Detaillierte Beschreibungen sind z. B. in den WO-A-99/06524 und 99/04313; in Liquid Detergents, Editor: Kuo-Yann Lai, Surfactant Sci. Ser., Vol. 67, Marcel Decker, New York, 1997, p. 272-304, zu finden.

## Beispiele

### I. Herstellung von erfindungsgemäßen kationischen Polykondensationsprodukten

Die im folgenden angegebenen mittleren Molekulargewichte $M_w$ wurden nach der Methode der Größenausschlußchromatographie mit engverteiltem Pullulan als Eichstandard bestimmt.

Die Bestimmung der angegebenen K-Werte erfolgte nach H. Fikentscher, CelluloseChemie, Band 13, Seite 58-64 und 761-774 (1932) als 1 gew.-%ige Lösung in 3 gew.-%iger Kochsalzlösung bei 25°C.

### I.a. Herstellung von nichtcyclischen Aminen A1

#### Amin A1.1

Eine Mischung von 916,6 g (9,0 mol) N,N-Dimethylaminopropylamin und 300,5 g (5,0 mol) Harnstoff wurde unter Stickstoffeinleitung zunächst in 35 min auf 122°C und dann in 4 h auf 155°C erhitzt und anschließend weitere 12 h bei dieser Temperatur gerührt.

Das Amin A1.1 wurde in Form einer gelblichen, klaren Flüssigkeit erhalten.

#### Amin A1.2

73,1 g (0,5 mol) Adipinsäure wurden in 7 min zu 122,6 g (1,2 mol) auf 60°C erhitztem N,N-Dimethylaminopropylamin zugegeben, wobei sich die Mischung auf 120°C erwärmte. Nach 30minütigem Rühren bei 130°C wurde auf 150°C erhitzt und der Rückflußkühler gegen eine Destillationsbrücke ausgetauscht. Nachdem das Überdestillieren eines Gemisches von Wasser und N,N-Dimethylaminopropylamin zum Erliegen kam, wurden weitere 30,7 g (0,3 mol) N,N-Dimethylaminopropylamin zugegeben. Anschließend wurde die Temperatur auf 160°C erhöht und weitere 2 h destilliert. Danach wurde auf 120°C abgekühlt und weitere 45 min bei einem reduzierten Druck von 15 mbar destilliert.

Das Amin A1.2 wurde in Form eines leichtgelblichen Feststoffs erhalten.

#### Amin A1.3

Es wurde, wie bei Amin A1.2 beschreiben, vorgegangen, jedoch wurden anstelle von Adipinsäure 59,0 g (0,5 mol) Bernsteinsäure eingesetzt, und es wurde abschließend bei einem reduzierten Druck von 38 mbar destilliert.

Das Amin A1.3 wurde in Form eines leichtgelblichen Feststoffs erhalten.

#### Amin A1.4

Zu einer auf 2°C gekühlten 10 gew.-%igen Lösung von 44,5 g (0,2 mol) Isophorondiisocyanat in Essigester wurden 40,9 g (0,4 mol) N,N-Dimethylaminopropylamin in 26 min zugetropft, wobei die Temperatur auf 11°C stieg. Nach etwa der Hälfte des Zulaufs begann das Produkt als weißer Niederschlag auszufallen. Nach 30minütigem Nachrühren bei Raumtemperatur wurde Wasser bis zum vollständigen Auflösen des Niederschlags zugegeben. Die wäßrige Phase wurde abgetrennt, die organische Phase wurde zweimal mit Wasser gewaschen, dann wurden die wäßrigen Phasen vereinigt.

Das Amin A1.4 wurde als wäßrige, geringe Spuren Essigester enthaltende Lösung mit einem Feststoffgehalt von 26,8 Gew.-% erhalten.

#### Amin A1.5

Es wurde, wie bei Amin A1.4 beschrieben, vorgegangen, jedoch wurden anstelle von Isophorondiisocyanat

33,7 g (0,2 mol) Hexamethylendiisocyanat eingesetzt, und die Isolierung des Produkts wurden nach der 30minütigen Nachrührzeit wie folgt vorgenommen:

Der gebildete weiße Niederschlag wurde abfiltriert und bei 100 mbar Druck im Stickstoffstrom bei 70°C 23 h getrocknet.
Das Amin A1.5 wurde in Form eines weißen Feststoffs erhalten.

I.b. Umsetzung von nichtcyclischen Aminen (A1) bzw. Mischungen von cyclischen Aminen (A1) und cyclischen Aminen (A3) mit bifunktionellen Verbindungen (B)

Polykondensate 1 bis 16

Zu einer auf 80°C erhitzten, etwa 38 gew.-%igen wäßrigen Lösung von $x_1$ g ($y_1$ mol) des Amins (A1) und $x_3$ g ($y_3$ mol) des Amins (A3) wurden $x_2$ g ($y_2$ mol) der bifunktionellen Verbindung (B) in etwa 8 min zugetropft. Die Mischung wurde t h bei 100°C gerührt und dann einer zweistündigen Wasserdampfdestillation unterzogen.

Bei Polykondensat 13 und 15 wurden dem Amin A1.4 zunächst durch Destillation die letzten Reste Essigester entzogen.

Bei Polykondensat 14 und 16 wurde das Amin A1.5 zunächst etwa 45 gew.-%ig in Wasser suspendiert und dann auf 80°C erhitzt, wobei sich das Amin vollständig löste.

Weitere Einzelheiten zu diesen Versuchen sowie Feststoffgehalt und pH-Wert der erhaltenen wäßrigen Polykondensatlösungen und K-Wert und mittleres Molekulargewicht $M_w$ des Polykondensats sind in Tabelle 1 zusammengestellt.

Tabelle 1

| Polykondensat | $x_1$ [g] $y_1$ [mol] | (A1) | $x_3$ [g] $y_3$ [mol] | (A3) | $x_2$ [g] $y_2$ [mol] | (B) | t [h] | Festgehalt [Gew.-%] | pH-Wert | K-Wert | $M_w$ |
|---|---|---|---|---|---|---|---|---|---|---|---|
| 1 | 221,8<br>0,96 | A1.1 | - | - | 135,9<br>0,95 | Dichlordiethylether | 7 | 54,1 | 8,5 | 19,4 | 39 000 |
| 2 | 221,8<br>0,96 | A1.1 | - | - | 147,3<br>0,95 | 1,6-Dichlorhexan | 7 | 39,0 | 9,3 | 21,0 | 34500 |
| 3 | 221,8<br>0,96 | A1.1 | - | - | 87,9<br>0,95 | Epichlorhydrin | 5 | 49,1 | 9,2 | 15,4 | 8 500 |
| 4 | 65,7<br>0,21 | A1.2 | - | - | 26,0<br>0,28 | Epichlorhydrin | 5 | 26,7 | 5,6 | 15,1 | |
| 5 | 62,6<br>0,22 | A1.3 | - | - | 20,4<br>0,22 | Epichlorhydrin | 5 | 38,9 | 8,0 | 12,4 | 3150 |
| 6 | 62,6<br>0,22 | A1.3 | - | - | 31,5<br>0,22 | Dichlordiethylether | 19 | 28,3 | 5,7 | 9,9 | |
| 7 | 177,5<br>0,77 | A1.1 | 13,6<br>0,20 | Imidazol | 135,9<br>0,95 | Dichlordiethylether | 7 | 23,2 | 6,1 | 13,6 | |
| 8 | 110,9<br>0,48 | A1.1 | 34,0<br>0,50 | Imidazol | 135,9<br>0,95 | Dichlordiethylether | 7 | 33,0 | 5,3 | 15,7 | |
| 9 | 177,5<br>0,77 | A1.1 | 13,6<br>0,20 | Imidazol | 87,9<br>0,95 | Epichlorhydrin | 5 | 48,9 | 8,7 | 15,3 | 6800 |
| 10 | 110,9<br>0,48 | A1.1 | 34,0<br>0,50 | Imidazol | 87,9<br>0,95 | Epichlorhydrin | 5 | 49,0 | 9,3 | 14,0 | 4950 |
| 11 | 74,83<br>0,10 | A1.3 | 1,7<br>0,03 | Imidazol | 11,6<br>0,13 | Epichlorhydrin | 5 | 23,5 | 7,5 | 11,6 | 2850 |
| 12 | 65,0<br>0,10 | A1.2 | 7,0<br>0,10 | Imidazol | 19,1<br>0,21 | Epichlorhydrin | 5 | 22,5 | 9,6 | 11,8 | |
| 13 | 42,7<br>0,10 | A1.4 | - | - | 9,3<br>0,10 | Epichlorhydrin | 5 | 37,5 | 10,3 | 15,3 | |
| 14 | 30,0<br>0,08 | A1.5 | - | - | 7,5<br>0,08 | Epichlorhydrin | 5 | 24,1 | 8,0 | 26,0 | |

(fortgesetzt)

| Polykondensat | $x_1$ [g] $y_1$ [mol] | (A1) | $x_3$ [g] $y_3$ [mol] | (A3) | $x_2$ [g] $y_2$ [mol] | (B) | t [h] | Festgehalt [Gew.-%] | pH-Wert | K-Wert | $M_w$ |
|---|---|---|---|---|---|---|---|---|---|---|---|
| 15 | 34,1<br>0,08 | A1.4 | 5,5<br>0,08 | Imidazol | 14,8<br>0,16 | Epichlorhydrin | 5 | 18,2 | 9,6 | 12,8 | |
| 16 | 25,0<br>0,067 | A1.5 | 4,6<br>0,07 | Imidazol | 12,4<br>0,13 | Epichlorhydrin | 5 | 36,4 | 10,2 | 19,6 | |

II.a. Anwendung von erfindungsgemäßen kationischen Polykondensationsprodukten im Weichspülgang

Um die farbfixierende und farbübertragungsinhibierende Wirkung zu prüfen, wurden die kationischen Polykondensationsprodukte einem handelsüblichen Wäscheweichspüler zugesetzt. Ausgewähltes Farbgewebe (EMPA 130, EMPA 132, EMPA 133 oder EMPA 134) wurde in einer wäßrigen Lösung des Weichspülers bei 25°C vorgespült, geschleudert und anschließend getrocknet. Das so vorbehandelte gefärbte Gewebe wurde zusammen mit weißem Prüfgewebe aus Baumwolle und Ballastgewebe aus Baumwolle/Polyester sowie aus Polyester mit einem Waschmittel bei 60°C gewaschen.

Um die farbübertragungsinhibierende Wirkung zu bestimmen, wurde die Anfärbung des weißen Prüfgewebes nach dem Waschgang photometrisch ermittelt (Photometer: Elrepho® 2000 der Fa. Datacolor). Aus dem an dem Prüfgewebe gemessenen Remissionswerten wurde nach dem in A. Kud, Seifen, Öle, Fette, Wachse, Band 119, Seite 590-594 (1993) beschriebenen Verfahren die Farbstärke der Anfärbung bestimmt. Aus der Farbstärke für den Versuch mit der jeweiligen Prüfsubstanz, der Farbstärke für den Versuch ohne Prüfsubstanz und der Farbstärke des Prüfgewebes vor der Wäsche wurde die farbübertragungsinhibierende Wirkung der Prüfsubstanz gemäß der folgenden Formel in % ermittelt.

$$\text{FÜI-Wirkung [\%]} = \frac{\text{Farbstärke (ohne Polymer) - Farbstärke (mit Polymer)}}{\text{Farbstärke (ohne Polymer) - Farbstärke (vor der Wäsche)}} \times 100$$

Zur Prüfung des Farbverlustes des farbigen Gewebes wurde die Behandlung mit dem Weichspüler, die anschließende Wäsche und Trocknung 6 mal mit demselben Farbgewebe wiederholt. Das Weißgewebe wurde bei jedem Waschgang erneuert. Aus der Farbstärke des Farbgewebes vor der 1. Wäsche und der Farbstärke nach der 6. Wäsche wurde der Farbverlust gemäß der folgenden Formel in % bestimmt:

$$\text{Farbverlust [\%]} = \frac{\text{Farbstärke (vor der Wäsche) - Farbstärke (nach der 6. Wäsche)}}{\text{Farbstärke (vor der Wäsche)}} \times 100$$

Die in Weichspülgang und Hauptwaschgang verwendeten Waschbedingungen sind in Tabelle 2 zusammengestellt.

Die Zusammensetzung des Waschmittels ist in Tabelle 3 wiedergegeben.

Die Prüfergebnisse zur Farbübertragungsinhibierung sind in Tabelle 4 aufgeführt.

In Tabelle 5 sind die Prüfergebnisse zur Farbfixierung zusammengestellt.

Tabelle 2

| Waschbedingungen Weichspülgang | |
|---|---|
| Gerät | Launder-o-meter der Fa. Atlas, Chicago, USA |
| Weichspüler | Lenor® (Procter & Gamble) |
| Dosierung Weichspüler | 0,5 g/l Flotte |
| Dosierung Polykondensat | 0,05 g/l Flotte |
| Wasserhärte | 3 mmol/l Ca : Mg 4 : 1 |
| Flottenverhältnis | 1:12 |
| Spültemperatur | 25°C |
| Spüldauer | 15 min |
| Farbgewebe | 1 g EMPA 130 (C.I. Direct Red 83:1)<br>1 g EMPA 132 (C.I. Direct Black 22)<br>1 g EMPA 133 (C.I. Direct Blue 71)<br>0,5 g EMPA 134 (C.I. Direct Orange 39) |

(fortgesetzt)

| Waschbedingungen Weichspülgang | |
|---|---|
| | (alle Eidgenössische Materialprüfungsanstalt, St. Gallen, CH) |
| Prüfgewebe | 10 g Baumwollgewebe 221 (gebleicht) |
| Ballastgewebe | 5 g Mischgewebe 768 (65 : 35 PES : BW) + 5 g Polyestergewebe 854 |
| | |
| Waschbedingungen Hauptwaschgang | |
| Gerät | Launder-o-meter der Fa. Atlas, Chicago, USA |
| Dosierung Waschmittel | 4,5 g/l Flotte |
| Wasserhärte | 3 mmol/l Ca : Mg 4 : 1 |
| Flottenverhältnis | 1 : 12 |
| Waschtemperatur | 60°C |
| Waschdauer | 30 min |
| Farbgewebe | 1 g EMPA 130 (C.I. Direct Red 83:1)<br>1 g EMPA 132 (C.I. Direct Black 22)<br>1 g EMPA 133 (C.I. Direct Blue 71)<br>0,5 g EMPA 134 (C.I. Direct Orange 39)<br>(alle Eidgenössische Materialprüfungsanstalt, St. Gallen, Schweiz) |
| Prüfgewebe | 10 g Baumwollgewebe 221 (gebleicht) |
| Ballastgewebe | 5 g Mischgewebe 768 (65 : 35 PES : BW) + 5 g Polyestergewebe 854 |

Tabelle 3

| Zusammensetzung Waschmittel | |
|---|---|
| Inhaltsstoffe | [Gew.-%] |
| Lineares Alkylbenzolsulfonat | 9 |
| $C_{13}C_{15}$-Oxoalkohol x 7 EO | 6 |
| Zeolith A | 45 |
| Natriumcarbonat | 7 |
| Magnesiumsilikat | 0,8 |
| Natriumcitrat x 2 $H_2O$ | 12 |
| Acrylsäure/Maleinsäure-Copolymer, Na-Salz (AS/MS-Gewichtsverhältnis 70 : 30, $M_w$ 70 000) | 5 |
| Seife | 1,8 |
| Wasser | auf 100 |

Tabelle 4

| | FÜI-Wirkung [%] | | | |
|---|---|---|---|---|
| | EMPA 130 | EMPA 132 | EMPA 133 | EMPA 134 |
| Polykondensat 1 | 25 | 35 | 23 | 14 |
| Polykondensat 2 | 18 | 43 | 16 | 18 |
| Polykondensat 3 | 7 | 31 | 20 | 14 |

(fortgesetzt)

| | FÜI-Wirkung [%] | | | |
|---|---|---|---|---|
| | EMPA 130 | EMPA 132 | EMPA 133 | EMPA 134 |
| Polykondensat 4 | 20 | 18 | 14 | 17 |
| Polykondensat 5 | 20 | 20 | 10 | 17 |
| Polykondensat 6 | 22 | 23 | 15 | 16 |
| Polykondensat 7 | 27 | 36 | 14 | 18 |
| Polykondensat 8 | 23 | 31 | 15 | 11 |
| Polykondensat 9 | 20 | 20 | 20 | 22 |
| Polykondensat 10 | 45 | 28 | 18 | 24 |
| Polykondensat 11 | 25 | 34 | 18 | 19 |
| Polykondensat 12 | 26 | 35 | 24 | 17 |
| Polykondensat 15 | 32 | 11 | 5 | 6 |
| Polykondensat 16 | 28 | 24 | 10 | 8 |

Tabelle 5

| | Farbverlust [%] | | | |
|---|---|---|---|---|
| | EMPA 130 | EMPA 132 | EMPA 133 | EMPA 134 |
| ohne | 42 | 27 | 51 | 41 |
| Polykondensat 1 | 32 | 11 | 38 | 35 |
| Polykondensat 2 | 38 | 14 | 51 | 40 |
| Polykondensat 3 | 33 | 18 | 37 | 37 |
| Polykondensat 4 | 39 | 13 | 44 | 37 |
| Polykondensat 5 | 34 | 18 | 39 | 36 |
| Polykondensat 6 | 39 | 16 | 49 | 35 |
| Polykondensat 7 | 29 | 18 | 48 | 35 |
| Polykondensat 8 | 25 | 14 | 48 | 35 |
| Polykondensat 9 | 25 | 26 | 35 | 32 |
| Polykondensat 10 | 18 | 20 | 33 | 30 |
| Polykondensat 11 | 26 | 19 | 42 | 36 |
| Polykondensat 12 | 21 | 21 | 43 | 36 |
| Polykondensat 15 | 24 | 20 | 46 | 37 |
| Polykondensat 16 | 25 | 19 | 46 | 36 |

II.b. Anwendung von erfindungsgemäßen kationischen Polykondensationsprodukten im Hauptwaschgang

Ausgewähltes Farbgewebe (EMPA 130, EMPA 132, EMPA 133 oder EMPA 134) wurde in Gegenwart von weißem Prüfgewebe aus Baumwolle und Ballastgewebe aus Baumwolle/Polyester sowie aus Polyester mit einem Waschmittel bei 60°C unter Zusatz der kationischen Polykondensationsprodukte 8 mal hintereinander gewaschen.
Das weiße Prüfgewebe wurde nach jedem Waschgang erneuert. Zur Bestimmung der farbübertragungsinhibierenden Wirkung der Polykondensate wurde die Anfärbung des weißen Prüfgewebes nach der 1. Wäsche mittels Farbstärkebestimmung gemäß der oben genannten Formel zur Berechnung der FÜI-Wirkung quantifiziert. Aus der Farbstärke des

Farbgewebes vor der 1. Wäsche und der Farbstärke nach der 8. Wäsche wurde der Farbverlust gemäß der folgenden modifizierten Formel zur Berechnung des Farbverlusts ermittelt:

$$\text{Farbverlust [\%]} = \frac{\text{Farbstärke (vor der Wäsche) - Farbstärke (nach der 8. Wäsche)}}{\text{Farbstärke (vor der Wäsche)}} \times 100$$

Die Waschbedingungen entsprechen den in Tabelle 1 für den Hauptwaschgang angegebenen Bedingungen, jedoch wurden zusätzlich 0,10 g Polykondensat/l Flotte eingesetzt.

Es wurde dasselbe Waschmittel wie unter II.a. verwendet (Zusammensetzung s. Tabelle 3).

Die Prüfergebnisse zur Farbübertragungsinhibierung sind in Tabelle 6 aufgeführt.

In Tabelle 7 sind die Prüfergebnisse zur Farbfixierung zusammengestellt.

Tabelle 6

| | FÜI-Wirkung [%] | | |
|---|---|---|---|
| | EMPA 130 | EMPA 132 | EMPA 134 |
| Polykondensat 1 | | 32 | 9 |
| Polykondensat 2 | | 31 | 11 |
| Polykondensat 7 | 35 | 26 | |
| Polykondensat 8 | 33 | 28 | |
| Polykondensat 10 | 81 | 42 | |
| Polykondensat 12 | 50 | 36 | |

Tabelle 7

| | Farbverlust [%] | | |
|---|---|---|---|
| | EMPA 130 | EMPA 132 | EMPA 134 |
| ohne | | 29 | 46 |
| Polykondensat 1 | | 23 | 45 |
| Polykondensat 2 | | 23 | 46 |
| ohne | 47 | 35 | |
| Polykondensat 7 | 36 | 29 | |
| Polykondensat 8 | 40 | 29 | |
| Polykondensat 10 | 21 | 28 | |
| Polykondensat 12 | 25 | 25 | |

**Patentansprüche**

**1.** Verwendung von kationischen Produkten, die durch Umsetzung von

(A1) nichtcyclischen Aminen, hergestellt durch Umsetzung von

(A1a) Mono(N,N-dialkylaminoalkyl)aminen mit
(A1b) bifunktionellen Verbindungen, ausgewählt aus der Gruppe Harnstoff, Thioharnstoff, Dialkylcarbonate, aliphatische und aromatische Dicarbonsäuren und aliphatische und aromatische Diisocyanate;
im Molverhältnis 1,2 : 1 bis 2,1 : 1,

oder

(A2) Mischungen von nichtcyclischen Aminen (A1) und cyclischen Aminen (A3) im Molverhältnis 10 : 1 bis 1 : 10 mit
(B) bifunktionellen Verbindungen, ausgewählt aus der Gruppe der Alkylendihalogenide, Dihalogenalkylether, Halomethyloxirane und Bisepoxide,
in einem Molverhältnis (B) zu (A1) oder (B) zu (A2) von 0,6 : 1 bis 1,3 : 1 erhältlich sind,
als farbfixierender und/oder farbübertragungsinhibierender Zusatz zu Waschmitteln und Wäschenachbehandlungsmitteln.

**2.** Verwendung nach Anspruch 1, **dadurch gekennzeichnet, daß** man als Komponente (A1a) ein Mono(N,N-dialkylaminoalkyl)amin der allgemeinen Formel I

$$R^1R^2N\text{-}(CH_2)_n\text{-}NH_2 \qquad I$$

einsetzt, in der die Variablen folgende Bedeutung haben:

$R^1$, $R^2$ unabhängig voneinander $C_1$-$C_6$-Alkyl, das durch Hydroxy substituiert sein kann;
n 2 bis 6.

**3.** Verwendung nach Anspruch 1 oder 2, **dadurch gekennzeichnet, daß** man als Komponente (A3) ein cyclisches Amin, ausgewählt aus der Gruppe Imidazol, Alkylderiyate von Imidazol, Piperazin, Alkylderivate von Piperazin, Pyrazin und Pyrimidin, einsetzt.

**4.** Kationische Produkte, erhältlich durch Umsetzung von

(A1) nichtcyclischen Aminen, hergestellt durch Umsetzung von

(A1a) Mono(N,N-dialkylaminoalkyl)aminen mit
(A1b) bifunktionellen Verbindungen, ausgewählt aus der Gruppe Harnstoff, Thioharnstoff, Dialkylcarbonate, aliphatische und aromatische Dicarbonsäuren und aliphatische und aromatische Diisocyanate,
im Molverhältnis 1,2 : 1 bis 2,1 : 1,
mit

(B) bifunktionellen Verbindungen, ausgewählt aus der Gruppe der Halomethyloxirane und Bisepoxide,
im Molverhältnis (B) zu (A1) von 0,6 : 1 bis 1,3 : 1.

**5.** Kationische Produkte, erhältlich durch Umsetzung von

(A1) nichtcyclischen Aminen, hergestellt durch Umsetzung von

(A1a) Mono(N,N-dialkylaminoalkyl)aminen mit
(A1b) bifunktionellen Verbindungen, ausgewählt aus der Gruppe der aliphatischen und aromatischen Dicarbonsäuren und der aliphatischen und aromatischen Diisocyanate, im Molverhältnis 1,2 : 1 bis 2,1 : 1,
mit

(B) bifunktionellen Verbindungen, ausgewählt aus der Gruppe der Alkylendihalogenide, Dihalogenalkylether, Halomethyloxirane und Bisepoxide,
im Molverhältnis (B) zu (A1) von 0,6 : 1 bis 1,3 : 1.

**6.** Kationische Produkte, erhältlich durch Umsetzung von

(A2) Mischungen von
(A1) nichtcyclischen Aminen, hergestellt durch Umsetzung von

(A1a) Mono(N,N-dialkylaminoalkyl)aminen mit
(A1b) bifunktionellen Verbindungen, ausgewählt aus der Gruppe Harnstoff, Thioharnstoff, Dialkylcarbonate, aliphatische und aromatische Dicarbonsäuren und aliphatische und aromatische Diisocyanate, im Molverhältnis 1,2 : 1 bis 2,1 : 1,
und

(A3) cyclischen Aminen
im Molverhältnis 10 : 1 bis 1 : 10
mit
(B) bifunktionellen Verbindungen, ausgewählt aus der Gruppe der Alkylendihalogenide, Dihalogenalkylether, Halomethyloxirane und Bisepoxide,
im Molverhältnis (B) zu (A2) von 0,6 : 1 bis 1,3 : 1.

**7.** Waschmittel, enthaltend kationische Produkte gemäß einem der Ansprüche 4 bis 6 als farbfixierende und/oder farbübertragungsinhibierenden Zusatz.

**8.** Feste Waschmittelformulierungen, enthaltend

(a) 0,05 bis 20 Gew.-% mindestens eines kationischen Produkts gemäß den Ansprüchen 4 bis 6,
(b) 0,5 bis 40 Gew.-% mindestens eines nichtionischen, anionischen und/oder kationischen Tensids,
(c) 0,5 bis 50 Gew.-% eines anorganischen Builders,
(d) 0 bis 10 Gew.-% eines organischen Cobuilders und
(e) 0,1 bis 60 Gew.-% anderer üblicher Inhaltsstoffe, wie Stellmittel, Enzyme, Parfüm, Komplexbildner, Korrosionsinhibitoren, Bleichmittel, Bleichaktivatoren, Bleichkatalysatoren, weitere Farbschutzadditive und Farbübertragungsinhibitoren, Vergrauungsinhibitoren, Soil-Release-Polyester, Faserschutzadditive, Silicone, Farbstoffe, Bakterizide und Konservierungsmittel, Auflösungsverbesserer, Sprengmittel und/oder Wasser,

wobei die Summe der Komponenten (a) bis (e) 100 Gew.-% ergibt.

**9.** Flüssige Waschmittelformulierungen, enthaltend

(a) 0,05 bis 20 Gew.-% mindestens eines kationischen Produkts gemäß einem der Ansprüche 4 bis 6,
(b) 0,5 bis 40 Gew.-% mindestens eines nichtionischen, anionischen und/oder kationischen Tensids,
(c) 0 bis 20 Gew.-% eines anorganischen Builders,
(d) 0 bis 10 Gew.-% eines organischen Cobuilders,
(e) 0,1 bis 60 Gew.-% anderer üblicher Inhaltsstoffe, wie Soda, Enzyme, Parfüm, Komplexbildner, Korrosionsinhibitoren, Bleichmittel, Bleichaktivatoren, Bleichkatalysatoren, weitere Farbschutzadditive und Farbübertragungsinhibitoren, Vergrauungsinhibitoren, Soil-Release-Polyester, Faserschutzadditive, Silicone, Farbstoffe, Bakterizide und Konservierungsmittel, organische Lösemittel, Löslichkeitsvermittler, Hydrotrope, Verdicker und/oder Alkanolamine, und
(f) 0 bis 99,35 Gew.-% Wasser.

**10.** Wäschenachbehandlungsmittel, enthaltend kationische Produkte gemäß einem der Ansprüche 4 bis 6 als farbfixierenden und/oder farbübertragungsinhibierenden Zusatz.

**11.** Wäschenachbehandlungsmittel, enthaltend

(a) 0,05 bis 20 Gew.-% mindestens eines kationischen Produkts gemäß einem der Ansprüche 4 bis 6,
(b) 0,1 bis 40 Gew.-% mindestens eines kationischen Tensids,
(c) 0 bis 30 Gew.-% mindestens eines nichtionischen Tensids,
(d) 0,1 bis 30 Gew.-% anderer üblicher Inhaltsstoffe, wie Silicone, andere Gleitmittel, Benetzungsmittel, filmbildende Polymere, Duft- und Farbstoffe, Stabilisatoren, Faserschutzadditive, weitere Farbschutzadditive und Farbübertragungsinhibitoren, Komplexbildner, Viskositätsmodifizierer, Soil-Release-Additive, Löslichkeitsvermittler, Hydrotrope, Korrosionsschutzadditive, Bakterizide und/oder Konservierungsmittel, und
(e) 0 bis 99,75 Gew.-% Wasser.

## Claims

**1.** The use of cationic products which are obtainable by reaction of

(A1) noncyclic amines prepared by reaction of

(A1a) mono(N,N-dialkylaminoalkyl)amines with
(A1b) bifunctional compounds selected from the group of urea, thiourea, dialkyl carbonates, aliphatic and aromatic dicarboxylic acids and aliphatic and aromatic diisocyanates, in a molar ratio from 1.2:1 to 2.1:1, or

(A2) mixtures of noncyclic amines (A1) and cyclic amines (A3) in a molar ratio from 10:1 to 1:10
with
(B) bifunctional compounds selected from the group of the alkylene dihalides, dihaloalkyl ethers, halomethyloxiranes and bisepoxides
in a molar ratio of (B) to (A1) or (B) to (A2) of from 0.6:1 to 1.3:1
as a dye-fixing and/or dye transfer-inhibiting additive to laundry detergents and laundry aftertreatment compositions.

**2.** The use according to claim 1, wherein the component (A1a) used is a mono(N,N-dialkylaminoalkyl)amine of the general formula I

$$R^1R^2N\text{-}(CH_2)_n\text{-}NH_2 \qquad \text{I}$$

in which the variables are each defined as follows:

$R^1$, $R^2$ are each independently $C_1$-$C_6$-alkyl which may be substituted by hydroxyl;
n is from 2 to 6.

**3.** The use according to claim 1 or 2, wherein the component (A3) used is a cyclic amine selected from the group of imidazole, alkyl derivatives of imidazole, piperazine, alkyl derivatives of piperazine, pyrazine and pyrimidine.

**4.** A cationic product obtainable by reaction of

(A1) noncyclic amines prepared by reaction of

(A1a) mono(N,N-dialkylaminoalkyl)amines with
(A1b) bifunctional compounds selected from the group of urea, thiourea, dialkyl carbonates, aliphatic and aromatic dicarboxylic acids and aliphatic and aromatic diisocyanates, in a molar ratio from 1.2:1 to 2.1:1, with

(B) bifunctional compounds selected from the group of the halomethyloxiranes and bisepoxides
in a molar ratio of (B) to (A1) of from 0.6:1 to 1.3:1.

**5.** A cationic product obtainable by reaction of

(A1) noncyclic amines prepared by reaction of

(A1a) mono(N,N-dialkylaminoalkyl)amines with
(A1b) bifunctional compounds selected from the group of the aliphatic and aromatic dicarboxylic acids and aliphatic and aromatic diisocyanates, in a molar ratio from 1.2:1 to 2.1:1,
with

(B) bifunctional compounds selected from the group of the alkylene dihalides, dihaloalkyl ethers, halomethyloxiranes and bisepoxides
in a molar ratio of (B) to (A1) of from 0.6:1 to 1.3:1.

**6.** A cationic product obtainable by reaction of

(A2) mixtures of
(A1) noncyclic amines prepared by reaction of

(A1a) mono(N,N-dialkylaminoalkyl)amines with
(A1b) bifunctional compounds selected from the group of urea, thiourea, dialkyl carbonates, aliphatic and aromatic dicarboxylic acids and aliphatic and aromatic diisocyanates, in a molar ratio from 1.2:1 to 2.1:1, and

(A3) cyclic amines
in a molar ratio from 10:1 to 1:10
with
(B) bifunctional compounds selected from the group of the alkylene dihalides, dihaloalkyl ethers, halomethyloxiranes and bisepoxides
in a molar ratio (B) to (A2) of from 0.6:1 to 1.3:1.

**7.** A laundry detergent comprising cationic products according to any one of claims 4 to 6 as a dye-fixing and/or dye transfer-inhibiting additive.

**8.** A solid laundry detergent formulation comprising

(a) from 0.05 to 20% by weight of at least one cationic product according to claims 4 to 6,
(b) from 0.5 to 40% by weight of at least one nonionic, anionic and/or cationic surfactant,
(c) from 0.5 to 50% by weight of an inorganic builder,
(d) from 0 to 10% by weight of an organic cobuilder and
(e) from 0.1 to 60% by weight of other customary ingredients, such as standardizers, enzymes, perfume, complexing agents, corrosion inhibitors, bleaches, bleach activators, bleach catalysts, further dye protection additives and dye transfer inhibitors, graying inhibitors, soil-release polyesters, fiber protection additives, silicones, dyes, bactericides and preservatives, dissolution improvers, disintegrants and/or water,

where the sum of components (a) to (e) adds up to 100% by weight.

**9.** A liquid laundry detergent formulation comprising

(a) from 0.05 to 20% by weight of at least one cationic product according to any one of claims 4 to 6,
(b) from 0.5 to 40% by weight of at least one nonionic, anionic and/or cationic surfactant,
(c) from 0 to 20% by weight of an inorganic builder,
(d) from 0 to 10% by weight of an organic cobuilder and
(e) from 0.1 to 60% by weight of other customary ingredients, such as soda, enzymes, perfume, complexing agents, corrosion inhibitors, bleaches, bleach activators, bleach catalysts, further dye protection additives and dye transfer inhibitors, graying inhibitors, soil-release polyesters, fiber protection additives, silicones, dyes, bactericides and preservatives, organic solvents, solubilizers, hydrotropes, thickeners and/or alkanolamines, and
(f) from 0 to 99.35% by weight of water.

**10.** A laundry aftertreatment composition comprising cationic products according to any one of claims 4 to 6 as a dye-fixing and/or dye transfer-inhibiting additive.

**11.** A laundry aftertreatment composition comprising

(a) from 0.05 to 20% by weight of at least one cationic product according to any one of claims 4 to 6,
(b) from 0.1 to 40% by weight of at least one cationic surfactant,
(c) from 0 to 30% by weight of at least one nonionic surfactant,
(d) from 0.1 to 30% by weight of other customary ingredients, such as silicones, other lubricants, wetting agents, film-forming polymers, fragrances and dyes, stabilizers, fiber protection additives, further dye protection additives and dye transfer inhibitors, complexing agents, viscosity modifiers, soil-release additives, solubilizers, hydrotropes, corrosion protection additives, bactericides and/or preservatives, and
(e) from 0 to 99.75% by weight of water.

## Revendications

1. Utilisation de produits cationiques, qui peuvent être obtenus par mise en réaction

    (A1) d'amines acycliques, préparées par mise en réaction

        (A1a) de mono(N,N-dialkylaminoalkyl)amines avec
        (A1b) des composés bifonctionnels, choisis dans le groupe constitué par l'urée, la thio-urée, les carbonates de dialkyle, les acides dicarboxyliques aliphatiques et aromatiques et les diisocyanates aliphatiques et aromatiques,
        en un rapport molaire de 1,2:1 à 2,1:1,
        ou

    (A2) de mélanges d'amines acycliques (A1) et d'amines cycliques (A3) en un rapport molaire de 10:1 à 1:10 avec
    (B) des composés bifonctionnels, choisis dans le groupe des dihalogénures d'alkylène, dihalogénoalkyléthers, halogénométhyloxirannes et bisépoxydes,
    en un rapport molaire de (B) à (A1) ou de (B) à (A2) de 0,6:1 à 1,3:1,
    en tant qu'additif fixant les couleurs et/ou inhibant le transfert de couleur à des produits lessiviels et des produits de traitement après lavage.

2. Utilisation selon la revendication 1, **caractérisée en ce qu'**on utilise en tant que composant (A1a) une mono(N,N-dialkylaminoalkyl)amine de formule générale I

$$R^1R^2N\text{-}(CH_2)_n\text{-}NH_2 \qquad \text{I}$$

    dans laquelle les variables ont les significations suivantes :

    $R^1$, $R^2$ représentent, indépendamment l'un de l'autre, un groupe alkyle en $C_1$-$C_6$ qui peut être substitué par hydroxy ;
    n va de 2 à 6.

3. Utilisation selon la revendication 1 ou 2,
**caractérisée en ce qu'**on utilise en tant que composant (A3) une amine cyclique, choisie dans le groupe constitué par l'imidazole, des dérivés alkyle d'imidazole, la pipérazine, des dérivés alkyle de pipérazine, la pyrazine et la pyrimidine.

4. Produits cationiques, pouvant être obtenus par mise en réaction

    (A1) d'amines acycliques, préparées par mise en réaction

        (A1a) de mono(N,N-dialkylaminoalkyl)amines avec
        (A1b) des composés bifonctionnels, choisis dans le groupe constitué par l'urée, la thio-urée, les carbonates de dialkyle, les acides dicarboxyliques aliphatiques et aromatiques et les diisocyanates aliphatiques et aromatiques,
        en un rapport molaire de 1,2:1 à 2,1:1,
        avec

    (B) des composés bifonctionnels, choisis dans le groupe des halogénométhyloxirannes et bisépoxydes,
    en un rapport molaire de (B) à (A1) de 0,6:1 à 1,3:1.

5. Produits cationiques, pouvant être obtenus par mise en réaction

    (A1) d'amines acycliques, préparées par mise en réaction

        (A1a) de mono(N,N-dialkylaminoalkyl)amines avec
        (A1b) des composés bifonctionnels, choisis dans le groupe des acides dicarboxyliques aliphatiques et aromatiques et des diisocyanates aliphatiques et aromatiques,

en un rapport molaire de 1,2:1 à 2,1:1,
avec

(B) des composés bifonctionnels, choisis dans le groupe des dihalogénures d'alkylène, dihalogénoalkyléthers, halogénométhyloxirannes et bisépoxydes,
en un rapport molaire de (B) à (A1) de 0,6:1 à 1,3:1.

**6.** Produits cationiques, pouvant être obtenus par mise en réaction

(A2) de mélanges
(A1) d'amines acycliques, préparées par mise en réaction

(A1a) de mono(N,N-dialkylaminoalkyl)-amines avec
(A1b) des composés bifonctionnels, choisis dans le groupe constitué par l'urée, la thio-urée, les carbonates de dialkyle, les acides dicarboxyliques aliphatiques et aromatiques et les diisocyanates aliphatiques et aromatiques,
en un rapport molaire de 1,2:1 à 2,1:1,
et

(A3) d'amines cycliques
en un rapport molaire de 10:1 à 1:10
avec
(B) des composés bifonctionnels, choisis dans le groupe des dihalogénures d'alkylène, dihalogénoalkyléthers, halogénométhyloxirannes et bisépoxydes,
en un rapport molaire de (B) à (A2) de 0,6:1 à 1,3:1.

**7.** Produit lessiviel, contenant des produits cationiques selon l'une quelconque des revendications 4 à 6, en tant qu'additif fixant les couleurs et/ou inhibant le transfert de couleur.

**8.** Compositions de produits lessiviels solides, contenant

(a) 0,05 à 20 % en poids d'au moins un produit cationique selon les revendications 4 à 6,
(b) 0,5 à 40 % en poids d'au moins un tensioactif non ionique, anionique et/ou cationique,
(c) 0,5 à 50 % en poids d'un adjuvant actif de détergence inorganique,
(d) 0 à 10 % en poids d'un co-adjuvant actif de détergence organique et
(e) 0,1 à 60 % en poids d'autres composants usuels, tels que des charges, des enzymes, un parfum, des complexants, des agents anticorrosion, des agents de blanchiment, des activateurs de blanchiment, des catalyseurs de blanchiment, d'autres additifs protégeant les couleurs et inhibiteurs de transfert de couleur, des agents antiredéposition, des polyesters antisalissure, des additifs protecteurs des fibres, des silicones, des colorants, des bactéricides et des conservateurs, des agents améliorant la dissolution, des désintégrants et/ou de l'eau,
la somme des composants (a) à (e) étant égale à 100 % en poids.

**9.** Composition de produits lessiviels liquides, contenant

(a) 0,05 à 20 % en poids d'au moins un produit cationique selon l'une quelconque des revendications 4 à 6,
(b) 0,5 à 40 % en poids d'au moins un tensioactif non ionique, anionique et/ou cationique,
(c) 0 à 20 % en poids d'un adjuvant actif de détergence inorganique,
(d) 0 à 10 % en poids d'un co-adjuvant actif de détergence organique et
(e) 0,1 à 60 % en poids d'autres composants usuels, tels que la soude, des enzymes, un parfum, des complexants, des agents anticorrosion, des agents de blanchiment, des activateurs de blanchiment, des catalyseurs de blanchiment, d'autres additifs protégeant les couleurs et inhibiteurs de transfert de couleur, des agents antiredéposition, des polyesters antisalissure, des additifs protecteurs des fibres, des silicones, des colorants, des bactéricides et des conservateurs, des solvants organiques, des tiers-solvants, des agents hydrotropes, des épaississants et/ou des alcanolamines et
(f) 0 à 99,35 % en poids d'eau.

**10.** Produit de traitement après-lavage, contenant des produits cationiques selon l'une quelconque des revendications

4 à 6 en tant qu'additif fixant les couleurs ou inhibant le transfert de couleur.

**11.** Produit de traitement après-lavage, contenant

(a) 0,05 à 20 % en poids d'au moins un produit cationique selon l'une quelconque des revendications 4 à 6,
(b) 0,1 à 40 % en poids d'au moins un tensioactif cationique,
(c) 0 à 30 % en poids d'un tensioactif non ionique,
(d) 0,1 à 30 % en poids d'autres composants usuels, tels que des silicones, d'autres lubrifiants, des agents mouillants, des polymères filmogènes, des parfums et colorants, des stabilisants, des additifs protégeant les fibres, d'autres additifs protégeant les couleurs et inhibiteurs de transfert de couleur, des complexants, des modificateurs de viscosité, des additifs antisalissure, des tiers-solvants, des agents hydrotropes, des additifs anticorrosion, des bactéricides et/ou des conservateurs, et
(e) 0 à 99,75 % en poids d'eau.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9817762 A
- WO 9821301 A
- WO 0456888 A
- WO 9829529 A
- WO 0174982 A
- US 4157388 A
- DE 19840019 A
- WO 9906524 A
- WO 9904313 A


### In der Beschreibung aufgeführte Nicht-Patentliteratur


- Liquid Detergents. Surfactant Sci. Ser. Marcel Decker, 1997, vol. 67, 272-304
- **H. Fikentscher.** *CelluloseChemie,* 1932, vol. 13, 58-64761-774
- **A. Kud.** *Seifen, Öle, Fette, Wachse,* 1993, vol. 119, 590-594